# FASCICULE DE BREVET EUROPEEN

(11) **EP 0 448 478 B1**
(45) Date de publication et mention de la délivrance du brevet: **12.10.1994**
(21) Numéro de dépôt: 91400782.8
(22) Date de dépôt: 22.03.1991
(51) Int. Cl.: F16D 23/14

(54) **Ensemble d'accostage pour diaphragme d'un embrayage, notamment pour véhicules automobiles**
Druckvorrichtung für eine Kupplungstellerfeder, insbesondere für Kraftfahrzeuge
Thrust assembly for a clutch diaphragm spring, especially for automotive vehicles

(30) Priorité: 23.03.1990 FR 9003732
(43) Date de publication de la demande: 25.09.1991
(73) Titulaire: VALEO, 75848 Paris Cédex 17 (FR)
(72) Inventeur: Gay, Christian, F-80090 Amiens (FR); Regulski, Bernard, F-80080 Amiens (FR)
(74) Mandataire: Gamonal, Didier

(56) Documents cités:
- FR-A- 2 597 560
- FR-A- 2 633 353

## Description

La présente invention concerne un ensemble d'accostage pour un diaphragme d'embrayage, notamment pour véhicules automobiles du genre comportant, pour l'action en traction d'une butée de débrayage sur le diaphragme de l'embrayage, d'une part, une pièce d'accostage présentant une collerette, propre à son appui sur le diaphragme du côté de celui-ci opposé à la butée de débrayage, et une douille propre à traverser le diaphragme à la faveur de son ouverture centrale, et, d'autre part, s'étendant annulairement à l'intérieur de ladite douille de cette pièce d'accostage un jonc de couplage de forme globalement annulaire, qui, élastiquement déformable radialement, est propre à un attelage de la butée de débrayage par simple encliquetage de celle-ci.

Un tel montage est décrit dans les documents FR-A-2 633 353 et FR-A-2 597 560.

Dans ceux-ci, le jonc de couplage comporte pour son maintien, par rapport à la pièce d'accostage, au moins deux pattes saillantes vers l'extérieur dont l'une, dite patte ouverte, est ouverte et est dotée de deux brins radiaux séparés par une fente, tandis que l'autre, dite patte fermée, est fermée.

Lesdites pattes traversent chacune individuellement la douille de la pièce d'accostage, à la faveur d'évidements prévus à cet effet dans celle-ci.

Dans le document FR-A-2 597 560 la patte fermée et au moins une portion de la patte ouverte s'étendent dans le plan de la partie courante du jonc de couplage et la patte ouverte pénètre, radialement au moins localement, dans la douille à la faveur d'une échancrure que présente l'extrémité libre de ladite douille.

Cette disposition donne satisfaction, néanmoins elle pose un problème, lorsque la douille doit être raccourcie pour diminution de l'encombrement axial de l'ensemble d'accostage.

En effet, la résistance de celle-ci est diminuée, du fait de la réduction des bandes de matière présentes entre l'extrémité libre de la douille et les évidements.

La présente invention a pour objet de pallier cet inconvénient et donc de créer, de manière simple et économique, un ensemble d'accostage à encombrement axial réduit, tout en présentant une douille robuste et en procurant d'autres avantages.

Suivant l'invention un ensemble d'accostage du type décrit dans le document FR-A-2 597 560 est caractérisé en ce que l'échancrure est ouverte axialement, tandis que la patte fermée est logée dans un bossage saillant vers l'extérieur de la douille, fermé circonférentiellement et pratiqué dans ladite douille, en ce que l'extrémité libre de ladite douille est délimitée par un rebord radial dirigé vers l'axe de l'ensemble, et en ce que ledit bossage est fermé axialement par ledit rebord radial.

Grâce à l'invention, la longueur axiale de la pièce d'accostage peut être réduite, tout en ayant une douille robuste.

En effet, le bossage saillant rigidifie ladite douille, tout en ayant la possibilité d'étendre l'échancrure jusqu'au diaphragme.

On remarquera que le montage du jonc dans la douille peut être réalisé aisément, et que celui-ci peut être plan.

Dans une forme de réalisation la pièce d'accostage peut être rapportée sur le diaphragme à la faveur d'une rondelle élastique ondulée disposée du côté du diaphragme opposé à la pièce d'accostage et dotée de pattes d'assemblage.

Ces pattes comme décrit dans le susmentionné document FR-A-2 633 353 sont issues de zones d'ancrage reliées entre elles par des ondulations de la rondelle ondulée.

Compte tenu de la compacité axiale de la douille, il devient possible de rapprocher la butée de débrayage de la rondelle élastique, ce qui pose alors un nouveau problème de démontage, compte tenu de l'incompatibilité dans certains cas d'insérer un outil de démontage, entre la butée de débrayage et ladite rondelle élastique.

Pour résoudre ce problème, en liaison avec la compacité de la douille de la pièce d'accostage, suivant une autre caractéristique de l'invention un ensemble d'accostage du type susindiqué est caractérisé en ce que l'une des ondulations de la rondelle élastique est remplacée par un pont reliant entre elle deux zones d'ancrage successives en étant dans le même plan que celles-ci, et en ce que ledit pont est en correspondance avec ladite patte ouverte du jonc et avec l'échancrure ouverte de la douille.

Grâce à cette disposition il devient possible d'introduire un outil de démontage, telle qu'une pince, entre le diaphragme et ledit pont, en sorte que l'on peut accéder à la patte ouverte du jonc, qui peut s'étendre tout entière radialement dans l'ouverture centrale de la rondelle élastique et du diaphragme au bénéfice du basculement de celui-ci.

En outre le serrage élastique du diaphragme n'est pas perturbé outre mesure, puisque seule l'une des ondulations est remplacée par un pont.

La description en annexe illustre l'invention en référence aux dessins annexés dans lesquels :
- la figure 1 est une vue en élévation avec arrachement local d'un mécanisme d'embrayage équipé d'un ensemble selon l'invention ;
- la figure 2 est une vue en coupe axiale d'un ensemble pièce d'accostage-butée de débrayage équipé de la pièce d'accostage selon l'invention ;
- la figure 3 est une vue analogue à la figure 2 mais pour une position de désencliquetage de la butée ;
- la figure 4 est une vue en élévation montrant le jonc ;
- la figure 5 est une vue selon la flèche G de la figure 3 montrant l'ensemble d'accostage selon l'invention sans la rondelle élastique ;
- la figure 6 est une vue en élévation montrant la rondelle élastique ;
- la figure 7 est une vue à plus grande échelle montrant le pont et tel que repéré par l'encart C de la figure 6 ;
- la figure 8 est une vue en coupe selon la ligne B-B de la figure 6 ;
- la figure 9 est une vue en coupe selon la ligne A-A de la figure 6 ;
- la figure 10 est une vue en coupe selon la ligne A-A de la figure 5 ;
- la figure 11 est une vue en coupe selon la ligne B-B de la figure 5 ;
- la figure 12 est une vue en coupe selon ligne C-C de la figure 5.

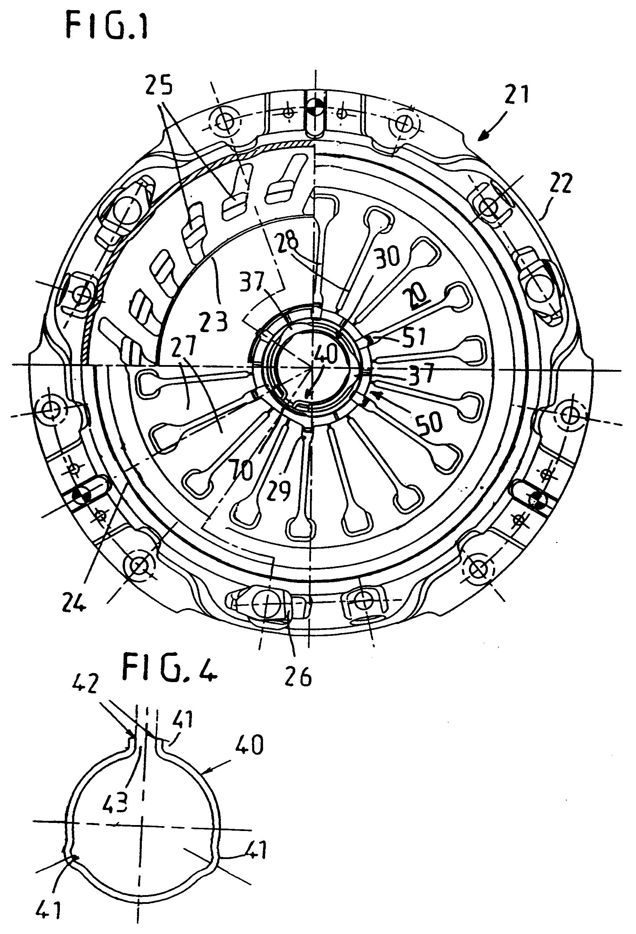

Tel qu'illustré dans les figures 1,2,3, il est mis en oeuvre, pour l'attelage d'une butée de débrayage 10 sur le diaphragme 20 d'un embrayage, d'une part, une pièce d'accostage 30 (ou coupelle d'appui) assujettie, par un montage décrit ultérieurement, à ce diaphragme 20 et, d'autre part, un jonc de couplage 40, élastiquement déformable radialement, porté par la pièce d'accostage 30 et propre à un encliquetage de la butée 10 sur la pièce d'accostage 30.

L'embrayage est du type "tiré" et comporte un mécanisme d'embrayage unitaire 21 avec un couvercle 22 de fixation à un plateau de réaction (non représenté), un plateau de pression 23 et le diaphragme 20.

Le fond du couvercle 22 est ouvert et offre un cordon d'appui 24 à la partie périphérique rondelle Belleville du diaphragme 20 annulaire.

Le plateau 23 offre également un appui 25, ici fractionné, au diaphragme 20.

Le plateau 23 est mobile axialement par rapport au couvercle 22 en étant lié en rotation à celui-ci, ici par des languettes tangentielles 26.

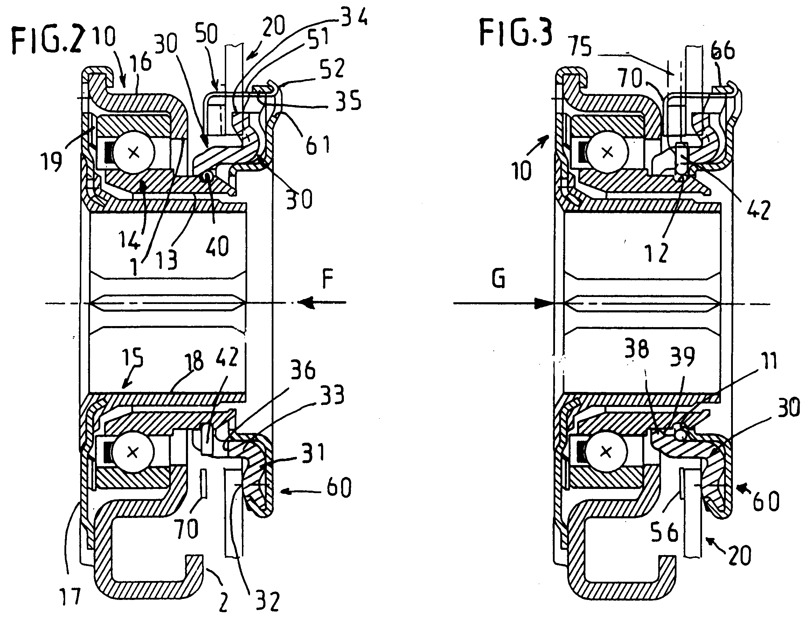

Le cordon 24 est disposé radialement au-dessus de l'appui 25, en sorte que pour débrayer il faut agir en traction, dans le sens de la flèche F de la figure 2, sur l'extrémité interne des doigts 27 du diaphragme 20 pour annuler la sollicitation qu'exerce normalement ledit diaphragme 20 sur le plateau 23.

Les doigts 27 forment la partie interne du diaphragme 20, d'une part, fragmentée en doigts 27 par des fentes 28, et d'autre part, centralement ouverte pour le passage d'une douille 33 de la pièce 30.

Le diaphragme 20 est doté d'échancrures 29 élargies, au nombre de six ici, à l'extrémité interne des doigts 27 pour passage de pattes 51 d'assemblage, d'orientation, globalement axiales, d'une rondelle élastique 50 ondulée à action axiale.

C'est cette rondelle qui permet ici de rapporter convenablement la pièce d'accostage sur le diaphragme.

La rondelle 50 porte axialement sur une première face de l'extrémité interne des doigts 27, celle tournée vers la butée 10, et est crochetée, directement ou indirectement, par ses pattes 51 sur la pièce d'accostage 30 après traversée axiale des échancrures 29.

Ainsi la rondelle 50 prend appui sur une première face du diaphragme et sollicite la pièce 30 au contact de la deuxième face des doigts 27, celle tournée à l'oppposé de la butée 10.

Pour ce faire, la pièce d'accostage 30, de forme annulaire, est dotée ici, globalement radialement, d'une collerette 31 profilée pour présenter un bourrelet d'appui 32 annulaire, en ayant ainsi globalement la forme d'un V en section.

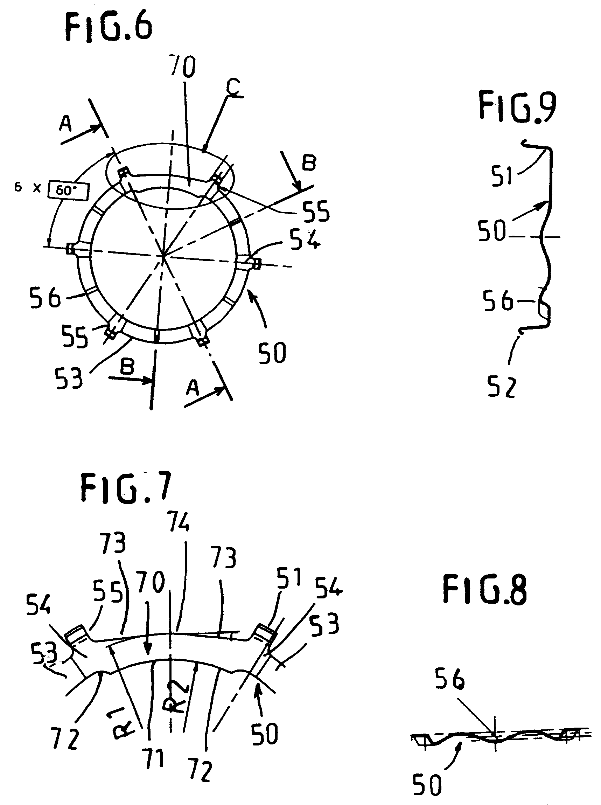

C'est ce bourrelet 32 qui porte sur le diaphragme 20 (figures 2 et 3) en étant maintenu axialement sans jeu au contact de l'extrémité des doigts 27 par la rondelle 50.

Le diaphragme 20 est donc serré élastiquement par pincement.

La pièce d'accostage 30, avantageusement en tôle emboutie, présente à sa périphérie interne une douille 33, qui se raccorde à la collerette 31 par un coude de pliage arrondi et qui, s'étendant globalement axialement, traverse l'ouverture centrale du diaphragme 20.

La collerette 31 est dotée de déformations locales saillante axialement 34, ici au nombre de trois, pour pénétration dans les échancrures 29 et blocage en rotation de la pièce 30 par rapport au diaphragme 20.

Cette collerette 31 est munie à sa périphérie externe de six échancrures 35, régulièrement réparties circulairement comme les pattes 51, pour passage desdites pattes 51 dont l'extrémité libre 52 est en forme de crochet, pour venir en prise, du côté opposé au diaphragme, avec la face dorsale d'une pièce de retenue 60.

Bien entendu on peut prévoir un autre mode d'assemblage, par exemple un sertissage, l'extrémité des pattes 51 étant rabattue radialement.

Ici la rondelle 50 est donc crochetée sur la pièce 60 grâce à des retours 52, en forme de crosse-d'évêque, dirigés à l'opposé de l'axe de la pièce 30.

Le jonc de couplage 40, de forme globalement annulaire, comporte, pour son maintien précentré par rapport à la pièce d'accostage 30, au moins deux pattes 41 saillantes radialement vers l'extérieur, dont l'une, dite patte ouverte, est ouverte et est dotée de deux brins radiaux 42 séparés par une fente 43, tandis que l'autre, dite patte fermée, est fermée.

La patte ouverte saillante 41 pénètre radialement au moins localement dans la douille 33, à la faveur d'une échancrure 36 que présente l'extrémité libre de ladite douille 33. Suivant l'invention, un ensemble d'accostage du type sus-indiqué est caractérisé en ce que l'échancrure 36 est ouverte axialement, tandis que la patte fermée est logée dans un bossage 37, saillant vers l'extérieur de la douille 33, fermé circonférentiellement et pratiqué dans ladite douille 33, en ce que l'extrémité libre de ladite douille 33 est délimitée par un rebord radial 38 dirigé vers l'axe de l'ensemble, et en ce que ledit bossage 37 est fermé axialement par ledit rebord 38.

Ici la douille 33 présente, à son extrémité libre, une échancrure 36 et deux bossages 37 ainsi que le rebord radial 38 dirigé vers l'axe de l'ensemble et délimitant l'extrémité libre de ladite douille 33.

L'échancrure 36 est profonde et s'étend jusqu'au voisinage du diaphragme 20. Elle est ouverte axialement.

Les bossages 37 s'étendent radialement en dessous du diaphragme 20, en ayant une faible hauteur. Ils sont réalisés ici par emboutissage comme la pièce 30.

Pour son maintien précentré par rapport à la coupelle 30, le jonc 40 présente, ici trois pattes 41 saillantes, dont la patte ouverte par la fente 43 pour délimitation de brins radiaux 42, avec une disposition symétrique des pattes fermées par rapport à la patte ouverte.

Plus précisément les bossages 37 sont destinés à recevoir, de manière complémentaire, les deux pattes fermées 41, s'étendant globalement radialement, tandis que l'échancrure 36 est propre à recevoir la patte ouverte 41 et à permettre un passage à jeu circonférentiel des brins radiaux 42, lesquels s'étendent en-dessous de la rondelle 50 dans l'ouverture centrale de celle-ci et du diaphragme 20. Globalement les bossages 37 et l'échancrure 36 sont répartis à 120°, les uns par rapport aux autres.

Les bossages 37 sont réalisés par déformation radiale saillante vers l'extérieur de la douille 33 et affectant axialement la totalité de celle-ci, ainsi que la racine de la collerette 31. Ils sont, de manière précitée, fermés axialement par le rebord 38, en étant circonférentiellement continus avec la partie courante de la douille 33.

Comme mieux visible à la figure 11, ces bossages 37 affectent une portée tronconique 39 adjacente au rebord 38 en interrompant celle-ci. La portée 39 est pratiquée dans l'alésage interne de la douille 33.

On notera que l'alésage interne du rebord 38 est conservé, ledit alésage permettant un guidage par rapport à la butée 10 par coopération avec la bague intérieure du roulement 14.

Ainsi qu'on le sait, la fente 43 permet un accroissement de l'élasticité du jonc 40 ainsi que son démontage, comme décrit ultérieurement.

Ce jonc 40, ici de forme globalement annulaire, suivant une caractéristique de l'invention, a une forme plane, en étant réalisé en fil rond, deux de ses pattes 41 étant globalement en forme de demi-onde, complémentaires à celles des bossages 37, les brins 42 s'étendant radialement en direction de la rondelle 50.

Le jonc 40 est porté intérieurement par la pièce 30 et plus précisément par l'alésage interne de la douille 33.

Il est propre à prendre appui après montage de la butée, d'une part, sur la portée tronconique 39 de la douille 33, et d'autre part, sur une portée d'entraînement 11 formée par l'un des flancs d'une gorge 12 que présente la butée de débrayage 10.

Le jonc 40 permet une solidarisation axiale au moins dans le sens de la flèce F de la figure 2 entre la pièce 30 et la butée 10.

Cette butée 10 comporte un élément de manoeuvre 15, propre à être soumis à l'action d'un organe de commande, telle qu'une fourchette de débrayage, et un élément d'attaque 13 propre à agir en traction sur le diaphragme 20 par l'intermédaire du jonc 40 et de la pièce 30.

Ici l'élément 13 est formé à la faveur d'un prolongement axial de la bague interne d'un roulement à billes 14, qui est attelé par un capot 16 à l'élément 15.

Cet élément de manoeuvre 15 a une forme de L inversée en section et comporte un flasque métallique transversal 17 sur lequel est surmoulé un manchon axial 18 en matière plastique, pour coulissement sur un quelconque organe de guidage, telle qu'une trompette de débrayage.

La butée 10 est type à auto-centrage maintenu et présente pour ce faire un moyen élastique à action axiale 19, ici une rondelle ondulée, qui prend appui sur le flasque 17, pour sollicitation de la bague externe du roulement 14 en direction d'un rebord radial 1 dirigé vers l'axe de l'ensemble du capot 16 assemblé par sertissage (figure 2) avec le flasque 17 et à l'aide de pattes repliées dudit flasque 17.

C'est sur des rebords radiaux 2, en forme de crochets de retenue, du capot 16 qu'est propre à agir ici une fourchette de débrayage.

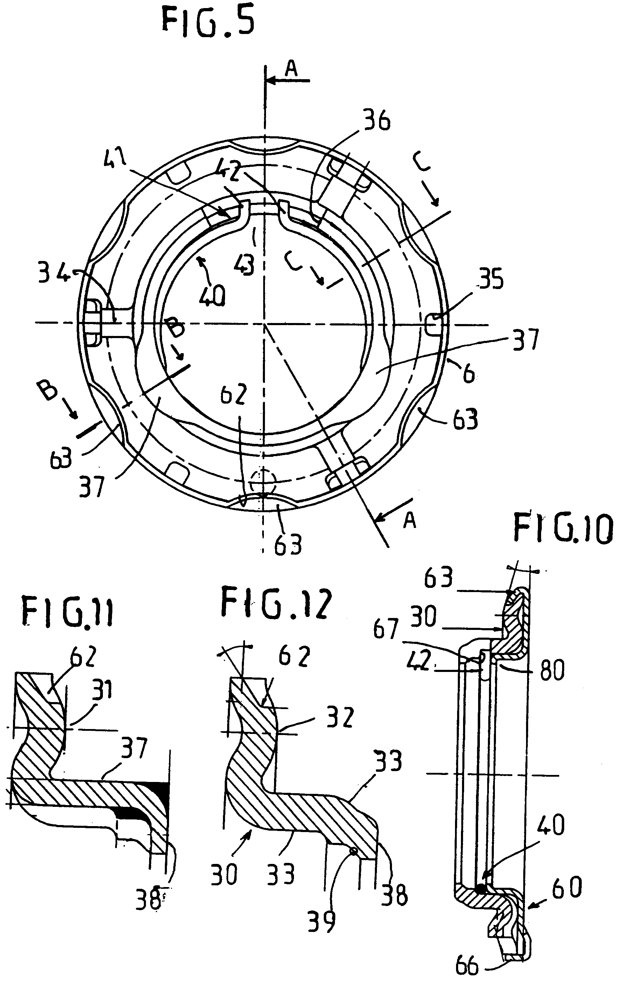

Le jonc 40 radialement élastiquement déformable est retenu axialement lors du montage par encliquetage de la butée 10 sur la pièce 30 (dans le sens de la flèche G de la figure 3), par une cage 67 formée axialement entre une portée de la douille 33 (figure 10) et la pièce de retenue 60 rapportée ici par sertissage sur la collerette 31, ladite plaque 60 présentant des ouvertures 61 pour le passage des pattes 51 et crochetage de celles-ci (figures 2 et 3).

Comme mieux visible dans les figures 5 et 10, compte tenu de la présence des bossages 37 et pour ne pas affaiblir outre mesure la collerette 31, la pièce 60 présente un rebord axial 66 à sa périphérie externe, dans lequel sont pratiquées par déformation, des pattes 63 de sertissage, en forme de demi-ondes, pénétrant dans des entailles 62 (figures 11 et 12) circonférentiellement de forme complémentaire que présente la périphérie externe de la collerette 31 dans la partie dégageante de celle-ci. Le rebord 66 coiffe la collerette 31.

Plus précisément (figures 11 et 12) ces entailles 62 sont délimitées intérieurement par un fond incliné, dont l'angle est représenté à la figure 12, et par une paroi d'orientation globalement axiale et parallèle à l'axe de l'ensemble d'accostage.

Grâce à ceci, un démontage et un remontage irréprochable de la butée peut être réalisé, le jonc 40 retenu dans la cage 67 occupant toujours la position souhaitée.

Comme mieux visible à la figure 5, suivant une autre caractéristique, deux des pattes 63 et des entailles 62, en forme de demi-ondes, tournées vers l'axe de l'axe, sont disposées en regard des bossages 37 eux aussi globalement en forme de demi-ondes mais tournés en sens inverse, tandis qu'une autre patte est dirigée vers l'échancrure 36 en étant dans l'axe médian de celle-ci.

Les bossages 37 sont disposés circonférentiellement entre une déformation locale 34 et une échancrure 35, tandis que les déformations 34 sont disposées circonférentiellement entre deux entailles 62.

On notera que les protubérances 34 sont en correspondance avec certaines des échancrures 35.

La collerette 31 est ainsi résistante tout en assurant de multiples fonctions.

Ici les brins 42 du jonc 40 sont disposés dans un plan radial médian pénétrant axialement entre le diaphragme 20 et la rondelle 50 comportant globalement une paroi transversale avec des ondulations 53, régulièrement réparties circulairement, s'étendant circonférentiellement chacune entre deux pattes axiales 51.

Les pattes 51 s'étendent en saillie axiale par pliage à partir de la périphérie externe de la rondelle 50 et se raccorde à celles-ci chacune par une zone d'ancrage globalement plane 54.

Cette zone 54 s'étend sur toute la hauteur de la rondelle 50 en forme de couronne, et se prolonge radialement en saillie, par rapport à la périphérie externe de la rondelle 50, par une zone radiale 55, dite de raccordement.

Cette zone 55 est rétrécie et est globalement de même largeur que les pattes 51, pour raccordement à celles-ci.

La zone 54 va en s'amincissant de la périphérie externe à la périphérie interne de la rondelle 50 et s'étend symétriquement de part et d'autre de l'axe de la patte 51 et de l'axe de la zone 55.

Les ondulations 53 ont une forme d'arc de cercle, et s'étendent chacune entre deux zones d'ancrage 54 successives, avec dans leur zone médiane un sommet 56 au contact du diaphragme 20.

Bien entendu en variante chaque ondulation 53 peut présenter plusieurs sommets.

Suivant l'une des caractéristiques de l'invention, l'une des ondulations 53 est remplacée par un pont 70 reliant entre elles deux zones d'ancrage 54 successives en étant dans le même plan que celles-ci, et en ce que ledit pont 70 est en correspondance avec la patte ouverte 41 du jonc 40 pour accès à celle-ci.

Ce sont donc les sommets 56 des deux ondulations 53 encadrant le pont 70 qui soutiennent celui-ci, en sorte qu'un espace axial est ménagé entre le pont 70 et le diaphragme 20 pour accès à la patte ouverte 41.

Suivant une autre caractéristique le pont 70 s'étend radialement, intérieurement en saillie par rapport à la périphérie interne de la rondelle 50.

Cette saillie forme ici une languette 71 raccordée à chacune de ses extrémités circonférentielles, par un arrondi 72 à la zone d'ancrage 54 concernée.

Suivant une autre caractéristique, le pont 70 est, à sa périphérie externe, globalement en-deçà de la circonférence délimitant la périphérie externe de la rondelle 30.

Ce pont 70 est délimité extérieurement par deux lignes rectilignes inclinées se raccordant de manière symétrique à un sommet 74 médian en arc de cercle du pont 70.

Ces lignes 73 se raccordent par un arrondi aux zones 55.

Le sommet 74 est situé sur une circonférence de rayon R1 légèrement inférieur au rayon de la circonférence délimitant la périphérie externe de la rondelle 50, tandis que l'extrémité de la languette 71 est en arc de cercle de rayon R2 inférieur à celui délimitant la périphérie interne de la rondelle 50.

Ainsi l'encombrement radial externe de la rondelle 50 n'est pas augmenté, tout en ayant suffisamment de matière grâce à la languette 71 pour avoir un pont résistant et sans trop perturber l'élasticité de la rondelle 50, la languette 71 étant faiblement saillante.

Le basculement du diaphragme n'est pas gêné ainsi par le pont 70 et en outre il est réalisé un détrompeur pour l'indexation de la rondelle 50 afin que le pont 70 soit disposé en correspondance avec l'échancrure 36.

On remarquera que la hauteur du pont est maximum au niveau des zones d'ancrage 54 et est minimum au niveau du sommet 74.

Ainsi il est possible d'engager une pince conformée 75 (figure 3) entre le diaphragme 20 et le rondelle 50, pour ouvrir le jonc 40 en agissant sur les brins 42 saillants de celui-ci, les lignes 73 et le sommet 74 permettant un dégagement de la pince 75.

On notera qu'au cours de cette ouverture la pince 75 n'est nullement gênée par une quelconque ondulation et qu'un espace circonférentiel assez grand est présent, ladite pince 75 pouvant même passer sous les zones d'ancrage 54.

Le démontage s'effectue en effectuant une surcourse de la butée selon la flèche G de la figure 3, tout en ouvrant le jonc 40 avec la pince 75 puis en déplaçant ensuite la butée en sens inverse, le jonc 40 étant toujours maintenu ouvert par la pince 75.

Ainsi qu'il ressort à l'évidence de la description, même dans le cas (figure 2) où les brins sont disposés au niveau du rebord 2 crocheté du capot 16, un démontage est possible.

La présente invention étend donc les possibilités de démontage, tout en ayant un ensemble butée-pièce d'accostage très compact axialement.

On appréciera que les bossages 37 permettent de ne pas affaiblir la douille 33, et que le sertissage de la plaque 60 est favorable à la compacité de l'ensemble tout en permettant un démontage et un remontage irréprochable de la butée.

On notera que la douille 33 est également courte grâce aux bossages 37, ainsi que l'élément d'attaque 13.

Tout ceci rend économique la butée de débrayage et la pièce d'accostage, tout en ayant une pièce d'accostage suffisamment robuste avec une échancrure 36 dont le fond est globalement à l'aplomb de l'extrémité libre interne 80 de la pièce 60 délimitant la cage 67.

Bien entendu la présente invention n'est pas limitée aux exemples de réalisation décrits, en particulier la butée 10 peut ne pas être du type auto-centreuse, le roulement 14 étant dans ce cas monté sans jeu radial par rapport au capot, et étant en contact direct avec le flasque 17.

La rondelle 50 peut assembler également par crochetage la plaque de retenue à la pièce d'accostage comme décrit dans le susmentionné brevet FR-A-2 633 353. La présence d'une plaque de retenue peut ne pas être indispensable dans certaines applications.

Les brins 42 peuvent se prolonger par un tronçon axial selon les applications et la position du jonc par rapport au diaphragme 20 et à la rondelle élastique 50.

Bien entendu la pince 75 est conformée selon les applications et peut avoir une partie légèrement inclinée, comme visible à la figure 3.

Le manchon 18 peut être d'un seul tenant avec le flasque 17 et l'assemblage élément d'attaque 13, élément de manoeuvre 15 peut être différent en étant réalisé par exemple par clipsage.

Les brins 42 peuvent être disposés dans un plan médian qui pénètre dans l'espace axial délimité par la rondelle 50 et le diaphragme 20, comme dans les figures, ou en variante ne pas pénétrer dans ledit espace, comme par exemple à la figure 1 du document FR-A-2 633 353, l'outil de démontage étant conformé en conséquence.

La patte ouverte 43 peut ne pas consister en deux brins radiaux, mais par exemple présenter deux branches en arc de cercle, éventuellement dotée de prolongements axiaux, comme décrit dans le susmentionné document FR-A-2 597 560.

Dans ce cas, deux pattes radiales seulement peuvent être prévues.

La pièce d'accostage 30 peut être convenablement assujettie au diaphragme 20 selon la disposition décrite dans le susmentionné document FR-A-2 597 560.

Dans ce cas, la collerette présente de place en place à sa périphérie externe des pattes axiales qui traversent également axialement le diaphragme, chacune entre deux doigts radiaux 27 adjacents de celui-ci, et qui, chacune respectivement porte, circonférentiellement en porte-à-faux, à leur extrémité, au droit de la collerette 31, et globalement parallèlement à celle-ci, des doigts de retenue propres à assurer, en coopération avec la collerette, le maintien axial de l'ensemble d'accostage sur l'embrayage 20.

Enfin la patte ouverte 41 peut pénétrer dans l'échancrure 36 en la traversant complètement même avant montage de la butée contrairement aux brins 42 de la figure 10 qui pénètrent seulement localement dans l'échancrure 36.

## Revendications

1. Ensemble d'accostage, du genre comportant, pour l'action en traction d'une butée de débrayage (10) sur le diaphragme (20) d'un embrayage, d'une part, une pièce d'accostage (30) présentant une collerette (31), propre à son appui sur le diaphragme (20) du côté de celui-ci opposé à la butée de débrayage (10), et une douille (33), propre à traverser le diaphragme (20) à la faveur de son ouverture centrale, et, d'autre part, s'étendant annulairement à l'intérieur de ladite douille (33) de ladite pièce d'accostage (30) un jonc de couplage (40), de forme globalement annulaire, qui, élastiquement déformable radialement, est propre à un attelage de la butée de débrayage (10) par simple encliquetage de celle-ci, ledit jonc de couplage (40) comportant, pour son maintien par rapport à la pièce d'accostage (30), au moins deux pattes (41) saillantes vers l'extérieur, dont l'une, dite patte ouverte, est ouverte et est dotée de deux brins radiaux (42) séparés par une fente (43), tandis que l'autre, dite patte fermée, est fermée, dans lequel la patte fermée et au moins une portion de la patte ouverte s'étendent dans le plan de la partie courante du jonc de couplage (40), et dans lequel la patte ouverte (41) pénètre radialement au moins localement dans la douille (33) à la faveur d'une échancrure (36) que présente l'extrémité libre de ladite douille (33), caractérisé en ce que l'échancrure (36) est ouverte axialement, tandis que la patte fermée est logée dans un bossage (37), saillant vers l'extérieur de la douille (33), fermé circonférentiellement et pratiqué dans ladite douille (33), en ce que l'extrémité libre de ladite douille (33) est délimitée par un rebord radial (38) dirigé vers l'axe de l'ensemble, et en ce que ledit bossage (37) est fermé axialement par ledit rebord radial (38).

2. Ensemble d'accostage selon la revendication 1, caractérisé en ce que le rebord radial (38) offre une portée tronconique (39) pour le jonc (40), et en ce que le bossage (37) affecte la portée tronconique (39).

3. Ensemble d'accostage selon la revendication 2, caractérisé en ce que le bossage (37) affecte la douille (33) sur la totalité de la longueur axiale de celle-ci.

4. Ensemble d'accostage selon la revendication 3, caractérisé en ce que le bossage (37) affecte la racine de la collerette (31) de la pièce d'accostage (30).

5. Ensemble d'accostage selon la revendication 3 ou 4, caractérisé en ce que le jonc de couple (40) est retenu par une cage (67) formée axialement entre une portée de la douille (33) et une pièce de retenue (60) rapportée par sertissage sur la collerette (31) de la pièce d'accostage.

6. Ensemble d'accostage selon la revendication 5, caractérisé en ce que le fond de l'échancrure (36) est globalement à l'aplomb de l'extrémité libre interne (80) de la pièce de retenue (60).

7. Ensemble d'accostage selon l'une quelconque des revendications 1 à 6, caractérisé en ce que le bossage (37) a une forme en demi-onde.

8. Ensemble d'accostage selon l'une quelconque des revendications 1 à 7, dans lequel la pièce d'accostage (30) est en tôle emboutie, caractérisé en ce que le bossage (37) est réalisé par déformation radiale saillante vers l'extérieur de la douille (33).

9. Ensemble d'accostage selon l'une quelconque des revendicatiions 1 à 8, dans lequel une pièce de retenue (60) est assemblée à la collerette (31), et dans lequel le jonc de couplage (40) présente deux pattes fermées (41) et la douille (33) deux bossages saillants (37), caractérisé en ce que ladite pièce de retenue (60) est assemblée par sertissage à ladite collerette (31), par l'intermédiaire de pattes en forme de demi-ondes (63) pénétrant dans des entailles (62) fermées par un fond que présente à cet effet la périphérie externe de la collerette (31), et en ce que certaines desdites pattes (63) sont disposées en regard des bossages saillants (37) de la douille (33).

10. Ensemble d'accostage selon l'une quelconque des revendications 1 à 9, dans lequel une rondelle élastique ondulée (50) assemble par des pattes d'assemblage (51), globalement axiales et propres à traverser le diaphragme, qu'elle présente à cet effet, la pièce d'accostage (30) au diaphragme (20), lesdites pattes (51) étant issues de zones d'ancrage (54) reliées entre elles par des ondulations (53), propres à venir en contact avec le diaphragme (20), caractérisé en ce qu'un pont (70) relie entre elles deux zones d'ancrage successives en étant dans le même plan que celles-ci, et en ce que ledit pont (70) est en correspondance avec la patte ouverte (41) du jonc (40) et avec l'échancrure ouverte (36) de la douille (33).

11. Ensemble d'accostage selon la revendication 10, caractérisé en ce que le bossage (37) s'étend radialement à l'intérieur de la rondelle élastique ondulée (50).

12. Ensemble d'accostage selon l'une quelconque des revendications 1 à 11, caractérisé en ce que le jonc de couplage (40) est plan et comporte, d'une part, deux pattes fermées (41) en forme de demi-ondes, et, d'autre part, une patte ouverte (41) dotée de deux brins radiaux (42) séparés par une fente (43), et en ce que la douille (33) présente deux bossages (37) pour réception desdites pattes fermées (41).

## Claims

1. A connecting device of the kind which, in order that a clutch release bearing (10) can act in traction on the diaphragm (20) of a clutch, comprises firstly a connecting piece (30), having a collar portion (31) adapted for the engagement of the connecting piece on the diaphragm (20) on the side of the latter opposite to the clutch release bearing (10), and a sleeve portion (33) adapted to pass through the diaphragm (20) via its central aperture, and secondly a coupling clip (40) of generally annular shape, which extends annularly within the said sleeve portion (33) of the said connecting piece (30) and which, being elastically deformable radially, is adapted for attachment of the clutch release bearing (10) by simple snap-fitting of the latter, the said coupling clip (40) having, for the purpose of retaining it with respect to the connecting piece (30), at least two outwardly projecting lugs (41), one of which, referred to as the open lug, is open and comprises two radial fingers (42) separated by a gap (43), while the other one, referred to as a closed lug, is closed, wherein the closed lug and at least a portion of the open lug lie in the plane of the main part of the coupling clip (40), and wherein the open lug (41) penetrates radially, at least locally, into the sleeve portion (33) via a slot (36) in the free end of the said sleeve portion (33), characterised in that the slot (36) is open axially, while the closed lug lies within an ear element (37) which projects outwardly from the sleeve portion (33) and which is closed circumferentially and formed in the said sleeve portion (33), in that the free end of the said sleeve portion (33) is bounded by a radial flange (38) directed towards the axis of the assembly, and in that the said ear element (37) is closed axially by the said radial flange (38).

2. A connecting device according to Claim 1, characterised in that the radial flange (38) offers a frustoconical surface (39) to the clip (40), and in that the ear element (37) is formed in the frustoconical surface (39).

3. A connecting device according to Claim 2, characterised in that the ear element (37) is disposed on the sleeve portion (33) to extend over the whole axial length of the latter.

4. A connecting device according to Claim 3, characterised in that the ear element (37) is joined to the root of the collar portion (31) of the connecting piece (30).

5. A connecting device according to Claim 3 or Claim 4, characterised in that the coupling clip (40) is retained by a cage (67) which is formed axially between a surface of the sleeve portion (33) and a regaining member (60) which is secured by seaming on the collar portion (31) of the connecting piece.

6. A connecting device according to Claim 5, characterised in that the base of the slot (36) is generally aligned with the internal free end (80) of the retaining member (60).

7. A connecting device according to any one of Claims 1 to 6, characterised in that the ear element (37) has the shape of a half wave.

8. A connecting device according to any one of Claims 1 to 7, in which the connecting piece (30) is of pressed sheet metal, characterised in that the ear element (37) is formed by radial deformation so as to project outwardly of the sleeve portion (33).

9. A connecting device according to any one of Claims 1 to 8, in which a retaining member (60) is assembled to the collar portion (31), and in which the coupling clip (40) has two closed lugs (41) and the sleeve portion (33) has two projecting ear elements (37), characterised in that the said retaining member (60) is attached by seaming to the said collar portion (31) through lugs (63) in the form of half waves, which penetrate into rebates (62) closed by a base and formed for this purpose in the outer periphery of the collar portion (31), and in that some of the said lugs (63) are disposed in facing relationship with the projecting ear elements (37) of the sleeve portion (33).

10. A connecting device according to any one of Claims 1 to 9, in which the connecting piece (30) is assembled to the diaphragm (20) by means of a corrugated elastic ring (50), through generally axial assembly lugs (51) formed on the corrugated ring for this purpose and adapted to pass through the diaphragm, with the said lugs (51) projecting from anchor zones (54) which are joined together through corrugations (53), and which are adapted to make contact with the diaphragm (20), characterised in that a bridge (70) joins two successive anchor zones together, being in the same plane as these latter, and in that the said bridge (70) is in corresponding relationship with the open lug (41) of the clip (40) and with the open slot (36) of the sleeve portion (33).

11. A connecting device according to Claim 10, characterised in that the the ear element (37) extends radially within the corrugated elastic ring (50).

12. A connecting device according to any one of Claims 1 to 11, characterised in that the coupling clip (40) is flat and has, firstly, two closed lugs (41) in the form of half waves, and secondly, one open lug (41) having two radial fingers (42) separated by a gap (43), and in that the sleeve portion (33) has two ear elements (37) for receiving the said closed lugs (41).

## Patentansprüche

1. Druckvorrichtung, die für die unter Zugkraft erfolgende Einwirkung eines Ausrücklagers (10) auf die Tellerfeder (20) einer Kupplung einerseits einen Druckring (30) umfaßt, der einen Kragen (31) für seine Auflage auf der Tellerfeder (20) auf ihrer dem Ausrücklager (10) gegenüberliegenden Seite und eine Hülse (33) für die Durchführung durch die Tellerfeder (20) vermittels ihrer mittigen Öffnung aufweist, sowie andererseits einen ringförmig im Innern der besagten Hülse (33) des Druckrings (30) angeordneten und insgesamt ringförmig ausgeführten Kopplungsring (40), der radial elastisch verformbar ist, um die Anbringung des Ausrücklagers (10) durch einfaches Einrasten zu ermöglichen, wobei dieser Kopplungsring (40) für seine Halterung im Verhältnis zum Druckring (30) mindestens zwei nach außen vorspringende Klammern (41) aufweist, von denen eine, die als offene Klammer bezeichnet wird, geöffnet und mit zwei durch einen Schlitz (43) getrennten radialen Endstücken (42) versehen ist, während die andere, die als geschlossene Klammer bezeichnet wird, geschlossen ist, und wobei sich die geschlossene Klammer und zumindest ein Abschnitt der offenen Klammer in der Ebene des durchlaufenden Teils des Kopplungsrings (40) erstrecken, während die offene Klammer (41) durch eine am freien Ende der Hülse (33) vorgesehene Aussparung (36) radial zumindest örtlich in die Hülse (33) eindringt , **dadurch gekennzeichnet,** daß die Aussparung (36) axial offen ist, während die geschlossene Klammer in einem außen an der Hülse (33) vorstehenden Vorsprung (37) aufgenommen ist, der am Kreisumfang geschlossen und in der besagten Hülse (33) vorgesehen ist, daß das freie Ende der Hülse (33) durch einen zur Achse der Vorrichtung gerichteten radialen Rand (38) begrenzt wird und daß der besagte Vorsprung (37) axial durch den genannten radialen Rand (38) abgeschlossen ist.

2. Druckvorrichtung nach Anspruch 1 , **dadurch gekennzeichnet,** daß der radiale Rand (38) eine kegelstumpfförmige Auflagefläche (39) für den Ring (40) aufweist und daß der Vorsprung (37) auf die kegelstumpfförmige Auflagefläche (39) übergreift.

3. Druckvorrichtung nach Anspruch 2 , **dadurch gekennzeichnet,** daß der Vorsprung (37) auf die Hülse (33) über deren gesamte axiale Länge übergreift.

4. Druckvorrichtung nach Anspruch 3 , **dadurch gekennzeichnet,** daß der Vorsprung (37) auf die Wurzel des Kragens (31) des Druckrings (30) übergreift.

5. Druckvorrichtung nach Anspruch 3 , **dadurch gekennzeichnet,** daß der Kopplungsring (40) in einer Aufnahme (67) gehalten wird, die axial zwischen einer Auflagefläche der Hülse (33) und einem Halteteil (60) gebildet wird, das durch Falzung am Kragen (31) des Druckrings angesetzt ist.

6. Druckvorrichtung nach Anspruch 5 , **dadurch gekennzeichnet,** daß der Boden der Aussparung (36) insgesamt eine senkrechte Stellung zum freien inneren Ende (80) des Halteteils (60) einnimmt.

7. Druckvorrichtung nach einem der Ansprüche 1 bis 6, **dadurch gekennzeichnet,** daß der Vorsprung (37) halbwellenförmig ausgebildet ist.

8. Druckvorrichtung nach einem der Ansprüche 1 bis 7, in welcher der Druckring (30) aus tiefgezogenem Blech ausgeführt ist, **dadurch gekennzeichnet,** daß der Vorsprung (37) durch eine außen an der Hülse (33) radial vorspringende Verformung gebildet wird.

9. Druckvorrichtung nach einem der Ansprüche 1 bis 8, in der ein Halteteil (60) mit dem Kragen (31) verbunden ist und der Kopplungsring (40) zwei geschlossene Klammern (41) und die Hülse (33) zwei radiale Vorsprünge (37) aufweist **, dadurch gekennzeichnet,** daß das Halteteil (60) durch Falzung mit dem Kragen (31) über halbwellenförmige Klammern (63) verbunden ist, die in Einschnitte (62) eingreifen, welche durch einen dazu an der Außenperipherie des Kragens (31) vorgesehenen Boden abgeschlossen sind, und daß einige dieser Klammern (63) gegenüber den vorstehenden Vorsprüngen (37) der Hülse (33) angeordnet sind.

10. Druckvorrichtung nach einem der Ansprüche 1 bis 9, in der eine gewellte Federscheibe (50) über dazu an ihr vorgesehene insgesamt axiale Befestigungsklammern (51) für den Durchgang durch die Tellerfeder den Druckring (30) mit der Tellerfeder (20) verbindet, wobei die besagten Klammern (51) aus Verankerungsbereichen (54) hervorgehen, die durch Wellungen (53) miteinander verbunden sind, die mit der Tellerfeder (20) in Berührung kommen können, **dadurch gekennzeichnet,** daß eine Brücke (70) zwei aufeinanderfolgende Verankerungsbereiche miteinander verbindet, wobei sie sich in der gleichen Ebene wie diese befindet, und daß diese Brücke (70) in Entsprechung zu der offenen Klammer (41) des Rings (40) und zu der offenen Aussparung (36) der Hülse (33) angeordnet ist.

11. Druckvorrichtung nach Anspruch 10 , **dadurch gekennzeichnet,** daß sich der Vorsprung (37) radial in das Innere der gewellten Federscheibe (50) erstreckt.

12. Druckvorrichtung nach einem der Ansprüche 1 bis 11, **dadurch gekennzeichnet,** daß der Kopplungsring (40) flach ausgeführt ist und einerseits zwei halbwellenförmige geschlossene Klammern (41) und andererseits eine offene Klammer (41) umfaßt, die mit zwei durch einen Schlitz (43) getrennten radialen Endstücken (42) versehen ist, und daß die Hülse (33) zwei Vorsprünge (37) für die Aufnahme der geschlossenen Klammern (41) aufweist.
